# EUROPEAN PATENT APPLICATION

(11) **EP 4 644 710 A1**
(43) Date of publication of application: **05.11.2025**
(21) Application number: 23910836.8
(22) Date of filing: 28.12.2023
(51) Int. Cl.: F16B 7/00, A47B 13/02

(54) **QUICKLY ASSEMBLED DESK FRAME CONNECTION STRUCTURE, AND ELECTRIC HEIGHT-ADJUSTABLE DESK**

(30) Priority: 30.12.2022 CN 202211712576
(71) Applicant: Changzhou Kaidi Electrical Inc., Changzhou,Jiangsu 213000 (CN)
(72) Inventor: DU, Ning, Changzhou, Jiangsu 213000 (CN); LIU, Tao, Changzhou, Jiangsu 213000 (CN)
(74) Representative: karo IP
(86) International application number: PCT/CN2023/142791
(87) International publication number: WO 2024/140920

(57) **Abstract**

The present disclosure relates to the technical field of lifting desks, in particular to a quick-assembly desk frame connection structure and an electric lifting desk. The quick-assembly desk frame connection structure includes a frame assembly and a plurality of lifting columns supporting the frame assembly. Each lifting column comprises a telescopic assembly and a metal box arranged at the end of the telescopic assembly. Either the side wall of the metal box or the inner wall of the cross beam assembly is provided with a plurality of trapezoidal protrusions, and the other is provided with slot openings adapted to the protrusions. A locking assembly is provided on the front wall of the metal box, which is a locking wedge plate connected to the front wall through a plurality of elastic members. The acting force of the elastic members is directed toward the opening of the metal box. Both sides of the first face wall of the locking wedge plate are provided with locking wings exceeding the side wall of the metal box, and the locking wings are embedded in the locking grooves of the cross beam assembly. In the present disclosure, when the lifting column is installed into the frame, the locking assembly automatically locks the lifting column and the frame, achieving quick installation.

## Description

### TECHNICAL FIELD

The present disclosure relates to the technical field of intelligent office furniture, and in particular to a quick-assembly desk frame connection structure and an electric lifting desk.

### BACKGROUND

Electric lifting desks are increasingly entering people's lives. Their function of quickly adjusting the height of the desk top well meets the needs of long-term desk workers for the sitting-standing alternation function. When installing the existing electric lifting desks on the market, generally more than 8 screws are used to lock the frame and the lifting columns. However, the installation is difficult, inefficient, and time-and labor-consuming.

To solve this problem, Chinese Patent (CN217565255U) discloses a quickly installable electric lifting desk. Its main technical scheme is as follows: A retaining groove is provided on the lifting column, and a shaft diameter is provided on the frame. The lifting column and the frame are clamped tightly by a latch mechanism composed of two sets of shaft diameters and retaining grooves. In addition, a locking device is used to prevent the lifting column and the frame from disengaging. However, the two sets of latch mechanisms have relatively high requirements for position accuracy, so the manufacturing cost is also relatively high. Moreover, this technical scheme cannot compensate for the gaps generated after the shaft diameter and the retaining groove are worn. After long-term use, the connection between the lifting column and the frame is prone to looseness.

Chinese Patent (CN107981540A) discloses a quickly assembled desk frame. Its technical scheme is to provide inclined groove slot openings and matching inclined protrusions on the lifting columns and the frame, and to press the lifting columns and the frame tightly by installing a crank wrench on the frame. Its drawback is that the crank wrench needs to be installed separately, and the initial installation needs to be carried out under the guidance of the installation instructions. If the crank wrench is forgotten to be installed or is not installed properly, there will be a safety risk of the lifting columns separating from the frame.

### SUMMARY

The technical problem to be solved by the present disclosure is that: To overcome the drawback in the prior art that the installation of the desk frame of an electric lifting desk is not fast enough, and to provide a quick-assembly desk frame connection structure that is easy to install, safe, reliable, and capable of automatic locking.

The technical scheme adopted by the present disclosure to solve its technical problems is as follows: A quick-assembly desk frame connection structure includes a frame assembly and a plurality of lifting columns supporting the frame assembly. The frame assembly includes a cross beam assembly and a longitudinal beam connected to the cross beam assembly. The lifting column includes a telescopic assembly and a metal box arranged at the end of the telescopic assembly. The metal box is arranged between the two cross beams of the cross beam assembly. One of the side walls of the metal box and the inner wall of the cross beam assembly is provided with a plurality of trapezoidal protrusions, and the other is provided with slot openings adapted to the protrusions. A locking assembly is provided on the front wall of the metal box. The locking assembly is a locking wedge plate connected to the front wall through a plurality of elastic members. The acting force of the elastic members is towards the opening of the metal box. Locking wings exceeding the side wall are provided on both sides of the first face wall of the locking wedge plate. The locking wings are embedded in the locking grooves of the cross beam assembly, so that the protrusions are in contact with the slot openings, and then the lifting column is locked on the frame assembly.

Further, a first connecting portion is provided on the metal box, a second connecting portion is provided on the locking wedge plate, and two ends of the elastic member are respectively connected to the first connecting portion and the second connecting portion.

Further, the second connecting portion is provided with a slotted opening.

Further, a via hole adapted to the second connecting portion is provided on the front wall, and the second connecting portion passes through the via hole into the metal box.

Further, the locking wings form an included angle with the first face wall.

Further, the included angle is 5°-30°.

Further, the locking groove is an independent groove or combined with the slot opening into one groove.

Further, the front wall is an inclined wall extending outward from the opening of the metal box, the first face wall of the locking wedge plate is fitted to the front wall, the locking wings have vertically downward locking surfaces, and the locking wings are embedded in the locking grooves of the cross beam assembly.

Further, the front wall is a vertical wall extending vertically downward, the first face wall of the locking wedge plate is fitted to the front wall, the locking wings are inclined surfaces, and the locking wings are embedded in the locking grooves of the cross beam assembly.

Further, a rounded corner is provided on the lower side of the locking wing.

Further, the locking wedge plate is made of metal or plastic.

Further, the elastic member is a tension spring or a compression spring.

Further, the number of the elastic members is 2, and the elastic members are arranged at both inner ends of the front wall.

Further, the front wall is provided with an unlocking hole and an unlocking support.

Further, the locking wedge plate is provided with an unlocking handle.

Further, the cross beam assembly includes two cross beams arranged in parallel, a connecting member snap-fitted between the two cross beams, and a connecting member snap-fitted at the ends of the two cross beams. The connecting member detachably fixes the two cross beams together.

Further, a first snap-fit portion adapted to the size of the cross beam is provided on the connecting member. A first undercut is formed to protrude on the outer vertical wall of the first snap-fit portion of the connecting member. A retaining groove adapted to the first undercut is provided on the outer side wall of the cross beam.

Further, the width of the first snap-fit portion is greater than the width of the cross beam, and a locking insert is provided between the first snap-fit portion and the cross beam.

Further, the locking insert is provided with a second undercut, and a snap-fit adapted to the second undercut is provided on the connecting member.

The present disclosure also provides an electric lifting desk, which adopts the quick-assembly desk frame connection structure in the above-mentioned solution.

The present disclosure has the beneficial effects of:
(1) In the technical scheme disclosed by the present disclosure, matching protrusions and slot openings are provided at the joint of the lifting column and the frame, and a locking assembly is provided on the metal box of the lifting column. When the lifting column is installed in the frame, the locking assembly automatically locks the lifting column and the frame under the action of the elastic member. The installation speed is very fast. There is no need to install additional crank wrenches or screws, which can effectively prevent the separation of the lifting column and the frame caused by missing screws, missing crank wrenches, or improper installation of crank wrenches, greatly improving the safety of the lifting desk during use.
(2) After the lifting column and the frame are installed in place, the locking assembly can emit a "click" sound to prompt the installer that the lifting column has been installed in place, realizing tool-free quick installation, reducing the installation difficulty, and improving the installation efficiency. Installation costs and after-sales service costs are saved.
(3) The locking assembly disclosed by the present disclosure is provided with a pre-acting force, which can automatically adjust the depth of the locking wedge plate inserted into the locking groove. This solution has relatively low requirements for the processing accuracy of the lifting column and the frame, reducing the processing cost.
(4) The locking assembly in the present disclosure is provided with a pre-acting force that can continuously tension the lifting column and the frame, making the connection between the lifting column and the frame more stable. During the use of the electric lifting desk, if a gap is generated at the joint of the lifting column and the frame due to the horizontal or vertical swing of the desk top, the locking assembly can adaptively fill the gap under the drive of the pre-acting force, effectively avoiding the situation that the shaking of the electric lifting desk becomes larger and larger after long-term use.
(5) The locking assembly disclosed by the present disclosure is provided with an unlocking structure. When the electric lifting desk needs to be disassembled, the pre-acting force of the locking wedge plate needs to be overcome to disassemble and separate the lifting column and the frame. This not only avoids the safety risks caused by children's mischievous or curious misoperation but also meets the needs of adults for quick disassembly.
(6) The frame disclosed by the present disclosure is a quick-assembly frame. The cross beams and longitudinal beams in the frame are connected by snap-fitting through connecting members, just like building blocks. The assembly is simpler and faster, making the packaging volume smaller and the packaging materials less, achieving the purpose of saving resources.
(7) All parts of the frame disclosed by the present disclosure are independent, which reduces the welding process, reduces welding deformation, and lowers the manufacturing difficulty and accuracy requirements. It not only reduces the manufacturing cost but also reduces the quality cost caused by poor welding.

### DESCRIPTION OF THE DRAWINGS

The present disclosure is further described below in conjunction with the accompanying drawings and embodiments.
FIG. 1 is a structural schematic diagram of the overall desk frame in the present disclosure;
FIG. 2 is an assembly diagram of the lifting column and the frame in the present disclosure;
FIG. 3 is an enlarged detail view of Position A in FIG. 2 in the present disclosure;
FIG. 4 is an exploded schematic diagram of the metal box and the locking assembly in the present disclosure;
FIG. 5 is a section view of the locking assembly in Embodiment 1 of the present disclosure;
FIG. 6 is a section view of the locking assembly in Embodiment 2 of the present disclosure;
FIG. 7 is a schematic diagram of the unlocking portion of the locking assembly in the present disclosure;
FIG. 8(a) is a section view of Step 1 of the installation process of the lifting column in the present disclosure;
FIG. 8(b) is an external schematic diagram of Step 1 of the installation process of the lifting column in the present disclosure;
FIG. 9(a) is a section view of Step 2 of the installation process of the lifting column in the present disclosure;
FIG. 9(b) is an external schematic diagram of Step 2 of the installation process of the lifting column in the present disclosure;
FIG. 10 is a structural schematic diagram of the frame assembly structure in the present disclosure;
FIG. 11 is a structural schematic diagram of the appearance and structure of the connecting member in the present disclosure;
FIG. 12 is a structural schematic diagram of the appearance and structure of the cross beam in the present disclosure;
FIG. 13 is a structural schematic diagram of the appearance and structure of the locking insert in the present disclosure.

In the drawings:
100. Frame assembly; 110. Cross beam assembly; 111. Cross beam; 111a. Slot opening; 111b. Locking groove; 111c. Retaining groove; 112. Connecting member; 112a. First undercut; 112b. Snap-fit; 112c. First snap-fit portion; 113. Locking insert; 113a. Second undercut; 120. Longitudinal beam;
200. Lifting column; 211. Metal box; 211a. First connecting portion; 211b. Via hole; 211c. Unlocking support; 211d. Unlocking hole; 211e. Protrusion; 211f. Front wall; 211g. Side wall; 212. Elastic member; 213. Locking wedge plate; 213a. Second connecting portion; 213b. Locking wing; 213c. First face wall; 213d. Rounded corner; 213e. Unlocking handle; 220. Telescopic assembly.

### DETAILED DESCRIPTION

The present disclosure will now be further described in detail with reference to the drawings and preferred embodiments. These drawings are simplified schematic diagrams for explaining only the basic structure of the present disclosure in a schematic manner, and therefore show only the construction related to the present disclosure.

### Embodiment 1

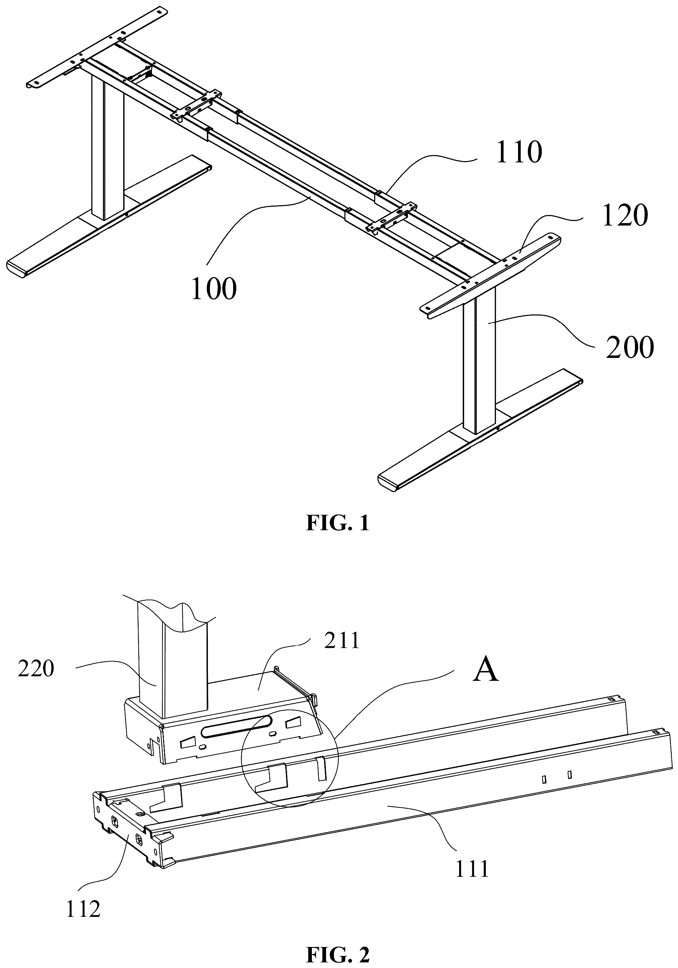

As shown in FIGS. 1 and 2, the technical scheme disclosed in the present disclosure is a quick-assembly desk frame connection structure, which includes a frame assembly 100 and a plurality of lifting columns 200 supporting the frame assembly 100. The frame assembly 100 comprises a cross beam assembly 110 and longitudinal beams 120 arranged at both ends of the cross beam assembly 110. The lifting column 200 includes a telescopic assembly 220 and a metal box 211 provided at the end of the telescopic assembly 220. As shown in FIGS. 2, 3, and 4, the metal box 211 is provided with a plurality of protrusions 211e, and the inner side of the cross beam assembly 110 is provided with slot openings 111a that are matched with the protrusions 211e. The protrusions 211e are in a trapezoidal shape that is narrow at the front and wide at the rear.

A locking assembly is provided on the front wall 211f of the metal box 211. The locking assembly is a locking wedge plate 213 connected to the front wall 211f through several elastic members 212. The acting force of the elastic members 212 is directed towards the opening of the metal box 211, causing the locking wedge plate 213 to move towards the opening of the metal box 211. Locking wings 213b extending beyond the side wall 211g of the metal box are provided on both sides of the first face wall 213c of the locking wedge plate 213. The locking wings 213b are embedded in the locking grooves 111b of the cross beam assembly 110. By using the principle of inclined planes to generate a horizontal component force, the metal box 211 moves along the direction of the cross beam 111, making the protrusions 211e fit with the slot openings 111a, and then locking the lifting column 200 on the frame assembly 100.

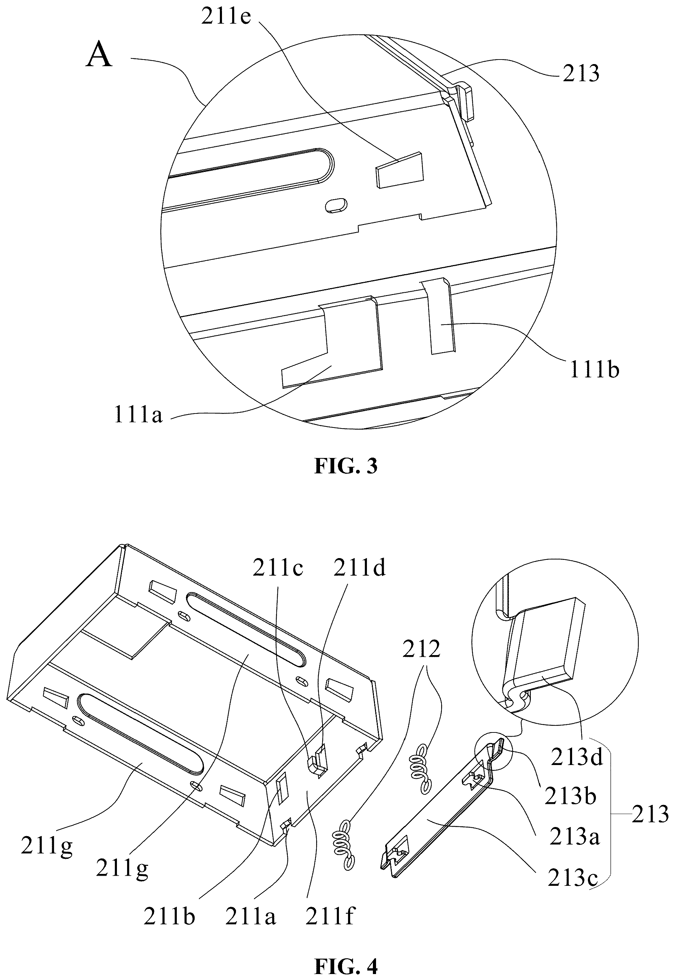

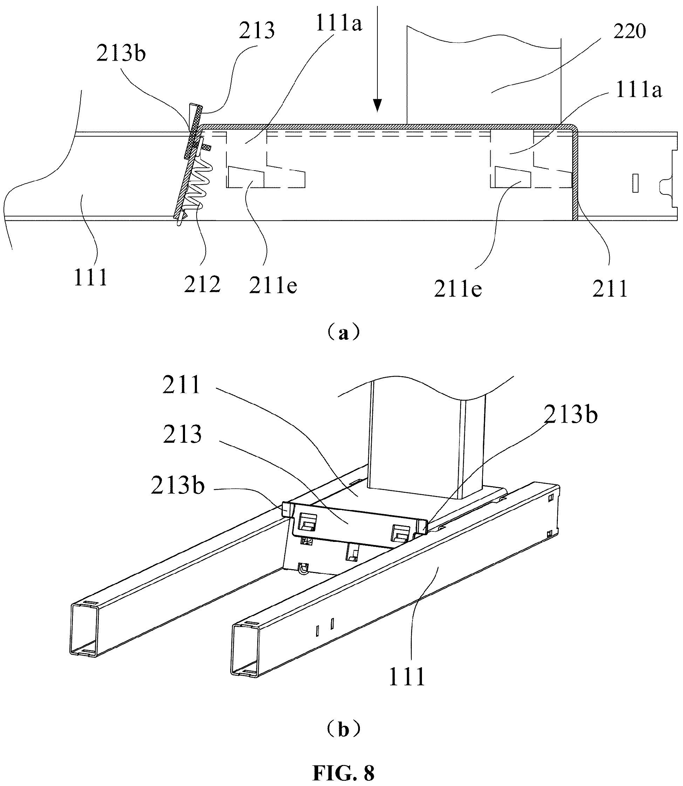

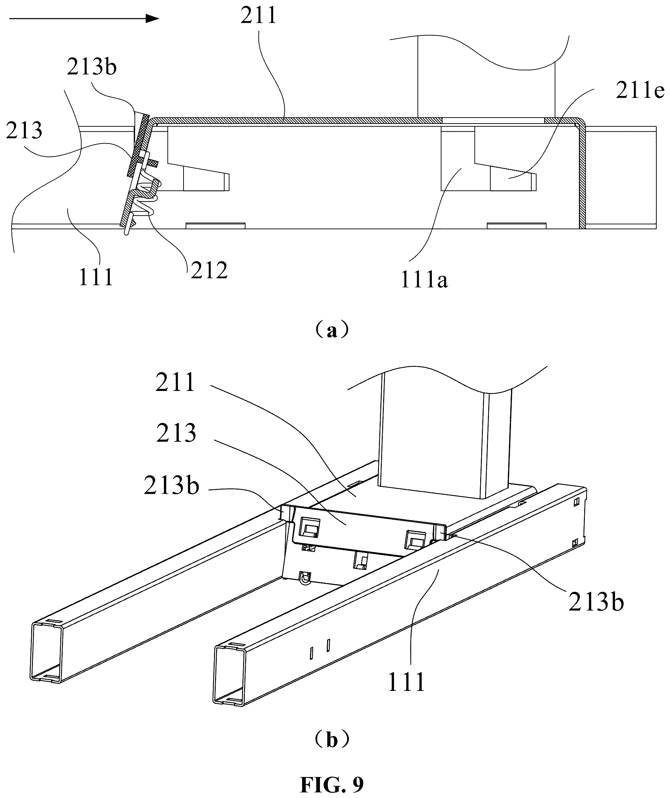

It should be noted that the protrusions 211e can be provided on the metal box or on the cross beam 111. As long as they can cooperate with the slot openings 111a, the requirements of technical scheme of the present disclosure can be met. The protrusions 211e are preferably in the shape of a trapezoid that is narrow at the front and wide at the rear. As long as their shape meets the requirement of a wedge that is narrow at the front and wide at the rear, the requirements of technical scheme of the present disclosure can be met, and there is no need to limit the protrusions 211e to a right-angled trapezoid. In addition, the locking grooves 111b can be independently provided on the cross beam 111, as shown in FIG. 4; the locking grooves 111b can also be combined with the slot openings 111a, and the slot openings 111a can be used as the locking grooves, as shown in FIG. 8(a) and FIG. 9(a). The slot openings 111a can serve both as the grooves that cooperate with the protrusions 211e and as the locking grooves into which the locking wings 213b are embedded. To avoid overcomplicating the technical scheme, in the present disclosure, it is preferred to describe the case where the protrusions 211e are provided on the metal box 211 and the slot openings 111a also function as the locking grooves. However, all the technical schemes mentioned in the above schemes fall within the protection scope of the present disclosure.

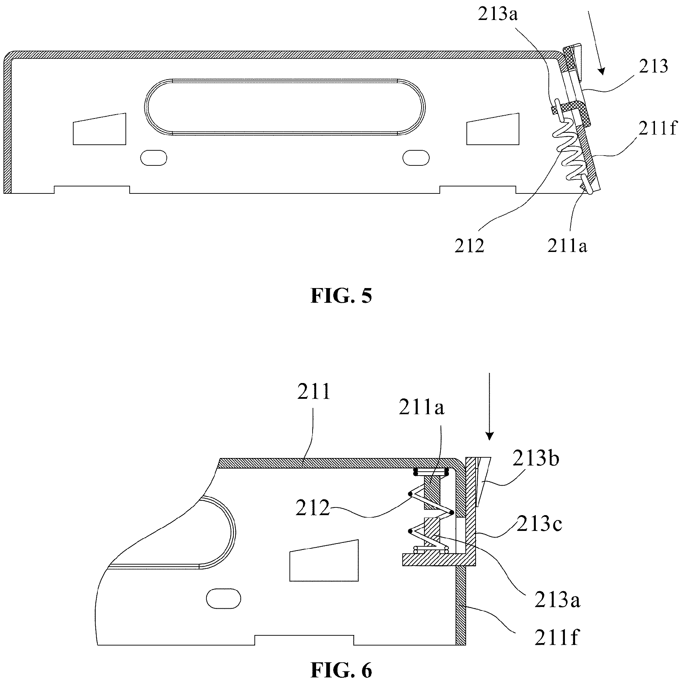

As shown in FIGS. 4 and 5, in this embodiment, the elastic member 212 is a tension spring. The tension spring is arranged inside the metal box 211. The metal box 211 is provided with a first connecting portion 211a, and the locking wedge plate 213 is provided with a second connecting portion 213a. The second connecting portion 213a passes through the via hole 211b provided in the metal box 211. Two ends of the elastic member 212 are respectively hung on the first connecting portion 211a and the second connecting portion 213a. As shown in FIG. 5, in one implementation of the locking assembly, the first connecting portion 211a can be made by directly punching and flanging from the opening of the metal box 211. One end of the elastic member 212 can be hung on the flange. Since the elastic member 212 is under tensile force and the metal box 211 also has a box cover to cover the opening, it can prevent the elastic member 212 from disengaging from the first connecting portion 211a. The second connecting portion 213a can also be made by punching and flanging from the locking wedge plate 213. The other end of the elastic member 212 is hung on the second connecting portion 213a. As shown in FIG. 6, in another implementation of the locking assembly, the second connecting portion 213a is provided with a slotted opening. The elastic member 212 is hung in the slotted opening, which can prevent the elastic member 212 from disengaging from the second connecting portion 213a during use. At the same time, the elastic member 212 being hung in the slotted opening can also limit the position of the locking wedge plate 213 in the direction of the cross beam, preventing the locking wedge plate 213 from disengaging from the front wall 211f of the metal box 211.

The front wall of the metal box 211 is an inclined wall. The first face wall 213c of the locking wedge plate 213 is in contact with the front wall of the metal box 211. Locking wings 213b are provided on both sides of the first face wall 213c, and the width of the two locking wings 213b exceeds that of the metal box 211. The locking wings 213b are embedded in the slot openings 111a of the cross beam assembly 110. Under the action of the elastic member 212, the locking wedge plate 213 moves towards the opening of the metal box 211. Meanwhile, since the front wall 211f of the locking wedge plate 213 is an inclined wall, the locking wedge plate 213 generates a horizontal component force on the metal box 211, causing the metal box 211 to move along the direction of the cross beam 111. As a result, the protrusions 211e fit and are tightened with the slot openings 111a, achieving the purpose of locking.

Wherein, the width of the via hole 211b is adapted to the width of the second connecting portion 213a. The via hole 211b can play the roles of limiting and guiding, allowing the locking wedge plate 213 to move only in the direction of the acting force of the elastic member 212.

The installation process of the lifting column 200 and the frame assembly 100 will be described with reference to FIGS. 8(a) and 8(b). When installing the lifting column 200 and the frame assembly 100, the frame assembly 100 should be placed flat on the lower side, and then the metal box 211 of the lifting column 200 should be installed facing downward, so that the protrusions 211e on the metal box 211 are placed into the slot openings 111a of the frame. At this time, since the width of the locking wings 213b of the locking wedge plate 213 is greater than the inner dimension between the two cross beams 111, the locking wings 213b are placed on the left and right cross beams 111. At this point, it is necessary to press down on the lifting column 200 with force to overcome the acting force of the elastic member 212. After making the protrusions 211e basically flush with the bottom surface of the slot openings 111a, then push the lifting column 200 with force so that the protrusions 211e of the lifting column 200 are inserted into the slot openings 111a of the frame. As shown in FIGS. 9(a) and 9(b), when the lifting column 200 is pushed into place, the locking wings 213b of the locking wedge plate 213 are simultaneously pushed to the slot openings 111a and move downward under the acting force of the elastic member 212. The locking wings 213b are inserted into the slot openings 111a. Under the action of the inclined plane principle, the metal box 211 and the cross beams 111 are tightened along the direction of the cross beams, achieving the purpose of locking the lifting column 200 and the frame assembly 100.

In the prior art, Chinese Patent CN107981540A discloses a quickly assembled desk frame. Its technical scheme is to provide inclined groove slot openings and matching inclined protrusions on the lifting columns and the frame, and to press the lifting columns and the frame tightly by installing a crank wrench on the frame. However, its drawback is that the crank wrench needs to be installed separately. If the crank wrench is forgotten to be installed, there will be a safety risk of the lifting column separating from the frame. In contrast, in the technical scheme of this embodiment, the lifting column is equipped with a locking device. When the lifting column is placed into the frame, automatic locking is achieved without additional installation steps, making the installation process simpler.

In the prior art, Chinese Patent CN217565255U discloses a quickly installable electric lifting desk. Its main technical scheme is as follows: A retaining groove is provided on the lifting column, and a shaft diameter is provided on the frame. The lifting column and the frame are clamped tightly by a latch mechanism composed of two sets of shaft diameters and retaining grooves. In addition, a locking device is used to prevent the lifting column and the frame from disengaging. A locking device is provided in the lifting column, and an elastic body is provided in the locking device. The elastic body is horizontally arranged, and its acting force is perpendicular to the cross beam. Its main function is to lock the lifting column and the frame to prevent the lifting column from disengaging from the frame. The two sets of latch mechanisms have relatively high requirements for position accuracy. If the position accuracy fails to meet the requirements, the phenomenon of being unable to be clamped in or being clamped loosely will occur, and the locking device cannot compensate for the gaps that may be generated after the shaft diameter and the retaining groove are worn. Compared with the above-mentioned prior art, in the locking assembly provided on the lifting column in this embodiment, the acting force direction of the elastic member is towards the opening of the metal box, and makes the metal box generate an acting force along the direction of the cross beam. The advantage of such an arrangement is that if a gap is generated between the locking wing and the locking groove, the locking wedge plate can move towards the opening of the metal box under the action of the elastic member, and can adaptively eliminate the gap between the lifting column and the frame, achieving a better locking effect and making the desk frame of the lifting desk more stable. As shown in FIG. 9, after the lifting column 200 and the frame assembly 100 are locked, the small-sized end of the locking wedge plate 213 is continuously pulled into the slot opening 111a under the action of the elastic member 212, and then the metal box 211 is continuously tightened.

Preferably, as shown in FIG. 4, the locking wedge plate 213 includes a first face wall 213c and locking wings 213b provided on both sides of the first face wall 213c. The locking wings 213b and the first face wall 213c are arranged at a certain angle, and generally form a wedge shape. If this angle is too small, the inclined plane will be close to a vertical plane, and the effect of the inclined plane cannot be achieved. If this angle is too large, the horizontal acting force generated by the inclined plane will be too small. Preferably, in order to further improve the tightening effect, the angle between the locking wing 213b and the first face wall 213c is 5°-30°.

This embodiment discloses an unlocking method: As shown in FIG. 4, an unlocking hole 211d and an unlocking support 211c are provided on the front wall 211f of the metal box 211. When unlocking is required, use a suitable rod-shaped tool (such as a screwdriver), insert it into the unlocking hole 211d, and place its end on the unlocking support 211c. With the unlocking support 211c as the fulcrum, pry the locking wedge plate 213 upwards to overcome the acting force of the elastic member 212, so that the locking wing 213b is disengaged from the slot opening 111a. Then, push the lifting column 200 out of the frame assembly 100. The main purpose of this technical scheme, which requires the use of a tool, is to increase the difficulty of unlocking and prevent naughty children from easily unlocking the lifting column and the frame, thereby reducing safety risks.

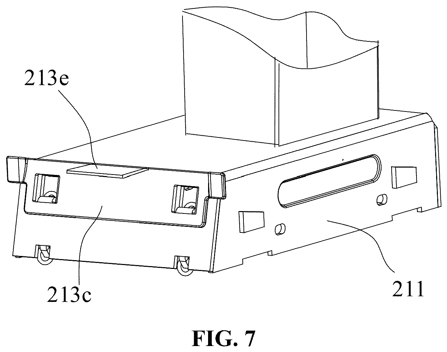

In addition, this embodiment also discloses another unlocking method. As shown in FIG. 7, an unlocking handle 213e bent and extended from the first face wall 213c is provided on the locking wedge plate 213. By manually pulling the unlocking handle 213e upwards and overcoming the acting force of the elastic member 212, move the locking wedge plate 213 upwards, so that the locking wing 213b is disengaged from the slot opening 111a. Then, push the lifting column 200 out of the frame assembly 100. This technical scheme does not require any tools, and the lifting column 200 and the frame assembly 100 can be separated manually, making the disassembly more convenient.

Preferably, the locking wedge plate 213 is made of metal and is manufactured by stamping. Its second connecting portion 213a, locking wing 213b, and unlocking handle 213e can all be made by stamping.

In addition, the locking wedge plate 213 can also be manufactured by integral injection molding. Its second connecting portion 213a, locking wing 213b, and unlocking handle 213e can all be directly injection-molded through a mold. Specific types of plastics can be selected from materials such as PBT, ABS, and PA66.

Preferably, as described above, the lifting column needs to be pushed during both the installation and disassembly processes of the lifting column and the frame. With reference to FIGS. 8 and 9, during the process of pushing the lifting column, the locking wing 213b is placed on the cross beam 111, and the locking wing 213b slides on the surface of the cross beam 111, which easily scratches the paint on the surface of the cross beam 111. Therefore, a rounded corner 213d is provided on the lower side of the locking wing 213b, as shown in FIG. 4. After the locking wing 213b is provided with a rounded corner, its arc surface contacts the surface of the cross beam, which can effectively reduce the scratching of the plastic powder on the surface of the cross beam.

### Embodiment 2

As shown in FIG. 6, the difference between this embodiment and Embodiment 1 is as follows: The elastic member 212 is a compression spring, the front wall 211f of the metal box 211 is a flat face wall, the first face wall 213c of the locking wedge plate 213 is in contact with the front wall 211f, and both ends of the locking wedge plate 213 are provided with locking wings 213b that form a certain angle with the first face wall 213c. The two ends of the elastic member 212 are respectively connected to the first connecting portion 211a and the second connecting portion 213a. The locking wedge plate 213 moves toward the opening of the metal box under the action of the elastic member 212, and the locking wings 213b are inserted into the locking grooves 111b to tension the metal box 211.

In combination with the above two embodiments, as shown in FIG. 4, the preferred number of the elastic members 212 is 2. The elastic members 212 are arranged inside the metal box 211 and near both sides of the front wall 211f. This arrangement allows the elastic members 212 to exert forces on the locking wings 213b at both ends of the locking wedge plate 213 respectively, making the force application more uniform.

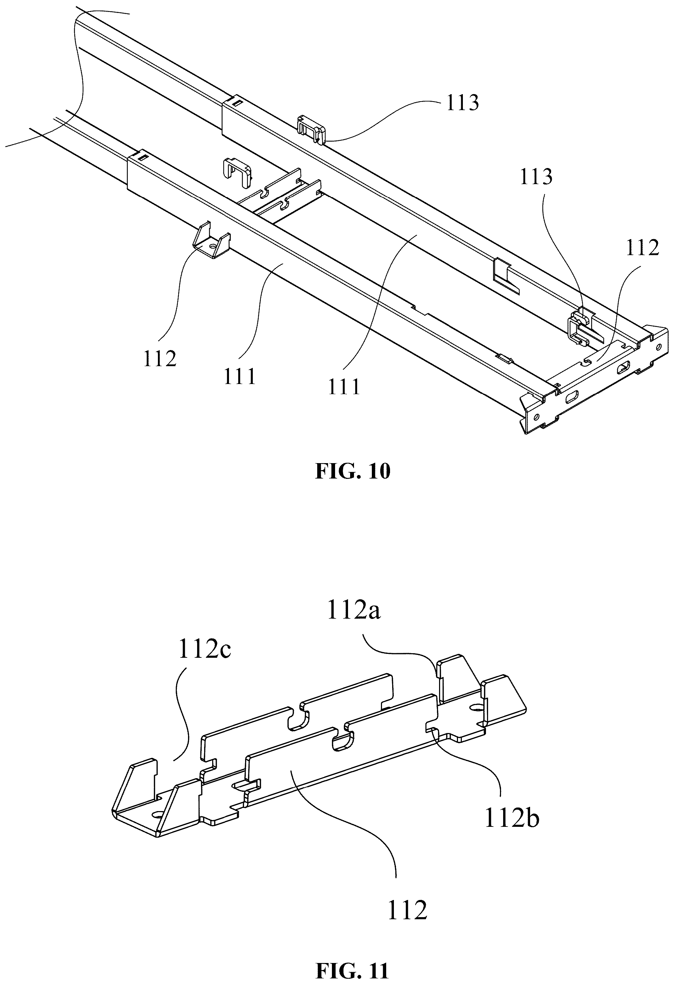

Furthermore, to enhance the fast installation effect of the lifting column and the frame and further optimize the user experience, the present disclosure optimizes the frame structure, as shown in FIGS. 10-13.

As shown in FIG. 10, the cross beam assembly 110 includes two cross beams 111 arranged in parallel, a connecting member 112 snap-fitted between the two cross beams 111, and a connecting member 112 snap-fitted at the ends of the two cross beams 111. The connecting member 112 detachably fixes the two cross beams 111 together. With this assembled frame, the cross beams 111 can be snap-fitted together by two connecting members 112, and the installation process is very convenient. The assembled design reduces the welding process of the frame, lowers the manufacturing cost, reduces the packaging volume, and decreases the transportation cost.

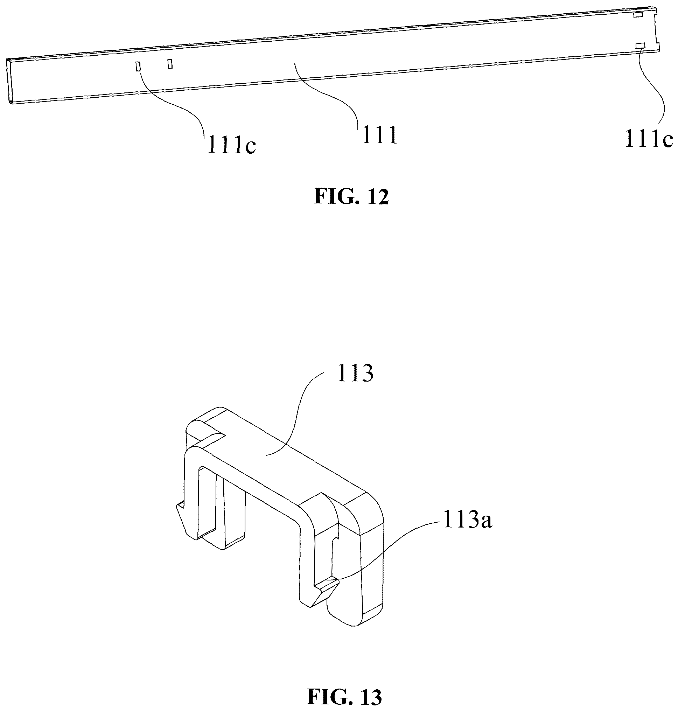

As shown in FIGS. 11 and 12, the connecting member 112 is provided with a first snap-fit portion 112c adapted to the size of the cross beam 111. The connecting member 112 is also provided with a first undercut 112a, and the cross beam 111 is provided with a retaining groove 111c adapted to the first undercut 112a.

Preferably, as shown in FIG. 10, the connecting member 112 can be provided with a first snap-fit portion 112c larger than the cross beam 111 in size, and a locking insert 113 is provided between the first snap-fit portion 112c and the cross beam 111. The locking insert 113 can tension the cross beam 111 and the connecting member 112.

As shown in FIG. 13, the locking insert 113 is provided with a second undercut 113a, and the connecting member 112 is provided with a snap-fit 112b adapted to the second undercut 113a. The locking insert 113 is a plastic part. During installation, the second undercut 113a can be inserted into the first snap-fit portion 112c by utilizing the inherent elasticity of the plastic part. The second undercut 113a can effectively prevent the locking insert 113 from falling off due to various swings during the use of the lifting desk.

The above-mentioned embodiments are only used to illustrate the technical concept and characteristics of the present disclosure. The purpose is to enable those familiar with this technology to understand and implement the content of the present disclosure, and they cannot be used to limit the protection scope of the present disclosure. All equivalent changes or modifications made according to the spirit of the present disclosure shall be covered within the protection scope of the present disclosure.

## Claims

1. A quick-assembly desk frame connection structure, comprising a frame assembly (100) and a plurality of lifting columns (200) supporting the frame assembly (100);
the frame assembly (100) includes a cross beam assembly (110) and a longitudinal beam (120) connected to the cross beam assembly (110);
the lifting column (200) includes a telescopic assembly (220) and a metal box (211) arranged at the end of the telescopic assembly (220), the metal box (211) is disposed between the two cross beams (111) of the cross beam assembly (110);
either the side wall (211g) of the metal box (211) or the inner wall of the cross beam assembly (110) is provided with a plurality of trapezoidal protrusions (211e), the other is provided with slot openings (111a) adapted to the protrusions (211e); and a locking assembly is provided on the front wall (211f) of the metal box (211), wherein:
the locking assembly is a locking wedge plate (213) connected to the front wall (211f) through a plurality of elastic members (212), the acting force of the elastic members (212) is directed towards the opening of the metal box (211); locking wings (213b) exceeding the side wall (211g) are provided on both sides of the first face wall (213c) of the locking wedge plate (213), and the locking wings (213b) are embedded in the locking grooves (111b) of the cross beam assembly (110), so that the protrusions (211e) are in contact with the slot openings (111a), and then the lifting column (200) is locked on the frame assembly (100).

2. The quick-assembly desk frame connection structure according to claim 1, wherein: a first connecting portion (211a) is provided on the metal box (211), a second connecting portion (213a) is provided on the locking wedge plate (213), and two ends of the elastic member (212) are respectively connected to the first connecting portion (211a) and the second connecting portion (213a).

3. The quick-assembly desk frame connection structure according to claim 2, wherein: the second connecting portion (213a) is further provided with a slotted opening.

4. The quick-assembly desk frame connection structure according to claim 2, wherein: a via hole (211b) adapted to the second connecting portion (213a) is provided on the front wall (211f), and the second connecting portion (213a) passes through the via hole (211b) into the metal box (211).

5. The quick-assembly desk frame connection structure according to claim 1, wherein: the locking wings (213b) form an included angle with the first face wall (213c).

6. The quick-assembly desk frame connection structure according to claim 5, wherein: the included angle is 5°-30°.

7. The quick-assembly desk frame connection structure according to claim 1, wherein: the locking groove (111b) is an independent groove or combined with the slot opening (111a) into one groove.

8. The quick-assembly desk frame connection structure according to claim 1, wherein: the front wall (211f) is an inclined wall extending outward from the opening of the metal box (211), the first face wall (213c) of the locking wedge plate (213) is fitted to the front wall (211f), the locking wings (213b) have vertically downward locking surfaces, and the locking wings (213b) are embedded in the locking grooves (111b) of the cross beam assembly (110).

9. The quick-assembly desk frame connection structure according to claim 1, wherein: the front wall (211f) is a vertical wall extending vertically downward, the first face wall (213c) of the locking wedge plate (213) is fitted to the front wall (211f), the locking wings (213b) are inclined surfaces, and the locking wings (213b) are embedded in the locking grooves (111b) of the cross beam assembly (110).

10. The quick-assembly desk frame connection structure according to claim 1, wherein: a rounded corner (213d) is provided on the lower side of the locking wing (213b).

11. The quick-assembly desk frame connection structure according to claim 1, wherein: the locking wedge plate (213) is made of metal or plastic.

12. The quick-assembly desk frame connection structure according to claim 1, wherein: the elastic member (212) is a tension spring or a compression spring.

13. The quick-assembly desk frame connection structure according to claim 1, wherein: the number of the elastic members (212) is 2, and the elastic members (212) are arranged at both inner ends of the front wall (211f).

14. The quick-assembly desk frame connection structure according to claim 1, wherein: the front wall (211f) is provided with an unlocking hole (211d) and an unlocking support (211c).

15. The quick-assembly desk frame connection structure according to claim 1, wherein: the locking wedge plate (213) is provided with an unlocking handle (213e).

16. The quick-assembly desk frame connection structure according to claim 1, wherein: the cross beam assembly (110) includes two cross beams (111) arranged in parallel, a connecting member (112) snap-fitted between the two cross beams (111), and a connecting member (112) snap-fitted at the ends of the two cross beams (111), and the connecting member (112) detachably fixes the two cross beams (111) together.

17. The quick-assembly desk frame connection structure according to claim 16, wherein: a first snap-fit portion (112c) adapted to the size of the cross beam (111) is provided on the connecting member (112), a first undercut (112a) is formed to protrude on the outer vertical wall of the first snap-fit portion (112c) of the connecting member (112), and a retaining groove (111c) adapted to the first undercut (112a) is provided on the outer side wall of the cross beam (111).

18. The quick-assembly desk frame connection structure according to claim 17, wherein: the width of the first snap-fit portion (112c) is greater than the width of the cross beam (111), and a locking insert (113) is provided between the first snap-fit portion (112c) and the cross beam (111).

19. The quick-assembly desk frame connection structure according to claim 18, wherein: a second undercut (113a) is provided on the locking insert (113), and the connecting member (112) is provided with a snap-fit 112b adapted to the second undercut (113a).

20. An electric lifting desk, wherein: the electric lifting desk adopts the quick-assembly desk frame connection structure according to any one of claims 1-19.
